## Europäisches Patentamt

## European Patent Office

## Office européen des brevets

(19)

(11) Veröffentlichungsnummer: **0 189 757**
**B1**

(12) **EUROPÄISCHE PATENTSCHRIFT**

(45) Veröffentlichungstag der Patentschrift:
**28.11.90**

(51) Int. Cl.⁵: **G05B 19/403**

(21) Anmeldenummer: **86100168.3**

(22) Anmeldetag: **08.01.86**

(54) **Steuerungseinrichtung für eine mehrachsige Werkzeugmaschine.**

(30) Priorität: **22.01.85 DE 3501968**

(43) Veröffentlichungstag der Anmeldung:
**06.08.86 Patentblatt 86/32**

(45) Bekanntmachung des Hinweises auf die Patenterteilung:
**28.11.90 Patentblatt 90/48**

(84) Benannte Vertragsstaaten:
**CH DE FR IT LI NL SE**

(56) Entgegenhaltungen:
**EP-A- 0 055 782**
**EP-A- 0 103 714**
**EP-A- 0 156 821**
**WO-A-85/01365**

**ELEKTRONIK, Nr. 6, 23. März 1984, Seiten 117-112,**
**Franzis Verlag, München, DE; H. WALZE: "Modulare**
**Maschinensteuerung bietet breites**
**Anwendungsspektrum"**

(73) Patentinhaber: **Siemens Aktiengesellschaft,**
**Wittelsbacherplatz 2, D-8000 München 2(DE)**

(72) Erfinder: **Röhrle, Josef, Dipl.-Ing. (FH), Am Kahlberg 12,**
**D-8521 Hessdorf(DE)**

ACTORUM AG

**Beschreibung**

Steuerungseinrichtung für eine mehrachsige Steuerungseinrichtung für eine mehrachsige Werkzeugmaschine.

Die Erfindung bezieht sich auf eine Steuerungseinrichtung für eine mehrachsige Werkzeugmaschine mit folgenden Merkmalen:

a) Die Steuerung erfolgt gemäß vorgegebenen Teilprogramme, entsprechend denen Soll-Lagen für alle Achsen ermittelt werden,

b) mit jeweils einem jeweils einer Achse zugeordneten Lagegeber wird die jeweilige Ist-Lage jeder lageregelbaren Achse erfaßt,

c) Soll-Lage und Ist-Lage jeder dieser Achsen sind jeweils mindestens einem Lageregler zuführbar, durch den jeweils ein dem Wert einer Soll-Bewegung entsprechendes Steuersignal für den der jeweiligen Achse zugeordneten Antrieb auslösbar ist,

d) eine bis zur Anzahl der lageregelbaren Achsen entsprechende Anzahl gleichartiger Prozessoren ist für die Lageregelung an die Steuerungseinrichtung schaltbar,

e) jedem Prozessor ist ein Übergabespeicher für die Soll-Lagen der Achsen zugeordnet,

f) es sind Speichermittel für die Werte aller Ist-Lagen und Soll-Bewegungen vorgesehen und

g) von jedem Prozessor her besteht Zugriffsmöglichkeit auf den gesamten Speicherinhalt der Speichermittel.

Moderne Werkzeugmaschinen weisen mit steigendem Automatisierungsgrad auch eine höhere Anzahl von Achsen auf. Beispielsweise werden moderne Drehmaschinen mit zwei unabhängigen Schlitten ausgerüstet und über zusätzliche Hilfsachsen wird u.a. die Verstellung des Reitstockes oder auch die Be- und Entladung der Maschine gesteuert.

Um eine genaue Positionierung aller Achsen zu gewährleisten, sind übliche Steuerungseinrichtungen so ausgebildet, daß eine Regelung der Ist-Lagen aller Achsen auf vorgegebene Soll-Lagen hin erfolgt. Für die Regelung wird dabei jeweils ein spezifischer Lageregler verwendet. Da jedoch je nach Einsatzfall eine unterschiedliche Dynamik des jeweiligen Lagereglers gefordert ist (eine einfache Fräs- oder Bohrmaschine kommt mit einem Lagereglerzyklus von 8 bis 10 msec aus, während eine hochdynamische Drehmaschine Zykluszeiten von etwa 1 bis 4 msec benötigt), sind die Lageregler unterschiedlich auszugestalten.

Eine Steuerungseinrichtung der eingangs genannten Art, die von ihren Leistungsvermögen an jeden technischen Anwendungsfall angepaßt werden kann, ist aus der EP-A 103 714 bekannt. Damit ist es möglich, bei geringen Dynamikanforderungen beispielsweise x Achsen von einem einzigen Lageregler seriell zu bedienen, während bei hohen Dynamikanforderungen für diese x Achsen auch x Lageregler verwendet werden können. Eine Variation einer einmal ausgewählten Konfiguration ist dabei jedoch nicht ohne weiteres möglich.

Aufgabe der Erfindung ist es, eine derartige Steuerungseinrichtung so auszubilden, daß eine Modifikation ohne schaltungstechnische Eingriffe jederzeit ermöglicht ist.

Gemäß der Erfindung wird diese Aufgabe durch die folgenden Merkmale gelöst,

h) von der Steuerungseinrichtung ist die jeweilige Anzahl der Prozessoren detektierbar und jedem Prozessor ist dementsprechend von der Steuerungseinrichtung mittelbar, für welche Gruppe der Achsen gemäß achsspezifischen Umsetzparametern das jeweilige Antriebs-Steuersignal jeweils zu generieren ist,

i) jedem Prozessor ist dazu ein Steckplatz innerhalb eines Baugruppenträgers zugeordnet,

j) jedem Prozessor ist dazu ein Typenkennzeichen zugeteilt,

k) von der Steuerungseinrichtung erfolgt während einer Initialisierungsphase ein Aufruf aller Steckplätze, der eine Antwort des jeweiligen Prozessors mit dessen Typenkennzeichen bedingt und

l) über die Steckplatzkennung ist jedem Prozessor seine für den weiteren Datenverkehr relevante Adresse von der Steuerungseinrichtung mitteilbar.

Damit ist eine modulare Lageregleranordnung ermöglicht, bei der zwar für den maximalen Ausbaugrad mit einzelnen Lagereglern die jeweils zugehörigen Steckplätze vorgesehen werden, bei der jedoch die Bestückung der Steckplätze je nach Erfordernis für die jeweilige Werkzeugmaschine anwenderseitig vorgenommen werden kann.

Dadurch, daß die Verbindung zwischen Steuerungseinrichtung und Prozessoren für die Lageregelung über ein zentrales Bussystem erfolgt und die Verbindung der Prozessoren für die Lageregelung mit den Speichermitteln über ein lokales Bussystem erfolgt, wobei jedem der Prozessoren ein Busarbiter zugeordnet ist, wohingegen die Werte der Soll-Bewegungen von den jeweiligen Speichermitteln fortlaufend an die zugehörigen Achsantriebe weiterleitbar sind und die Werte der Ist-Lagen den zugehörigen Speichermitteln fortlaufend von den Lagegebern zuführbar sind, wird eine übersichtliche und technisch leicht realisierbare Form der Datenübertragung mit entkoppeltem Datenfluß gewährleistet.

Sofern neben den Lagegebern auch Geber für die jeweiligen Ist-Bewegungen vorgesehen sind, ist es auch möglich, daß zwischen die Lageregler und die Achsantriebe jeweils Geschwindigkeitsregler schaltbar sind, wodurch eine zeitlich optimierte Lageregelung ermöglicht wird.

In diesem Fall können auch Speichermittel für die Werte der Ist-Bewegungen anstelle der Speichermittel für die Soll-Bewegungen vorgesehen sein, so daß die Prozessoren für die Lageregelung Zugriff zu den jeweiligen Ist-Bewegungen haben. Das kann beispielsweise dann von Bedeutung sein, wenn von den Teileprogrammen Bewegungen ausgeführt werden, die in einer oder mehreren Achsen, bei einer Drehmaschine beispielsweise der Spindelachse, korrelieren.

Sofern die Ist-Bewegungen erfaßt werden, ist es aber auch möglich, daß Speichermittel für die Werte der Ist-Bewegungen parallel zu den Speichermitteln für die Soll-Bewegungen vorgesehen sind. Dies könnte beispielsweise dann von Vorteil sein, wenn die Prozessoren für die Lageregelung auch die Funktion der Geschwindigkeitsregelung beinhalten sollten.

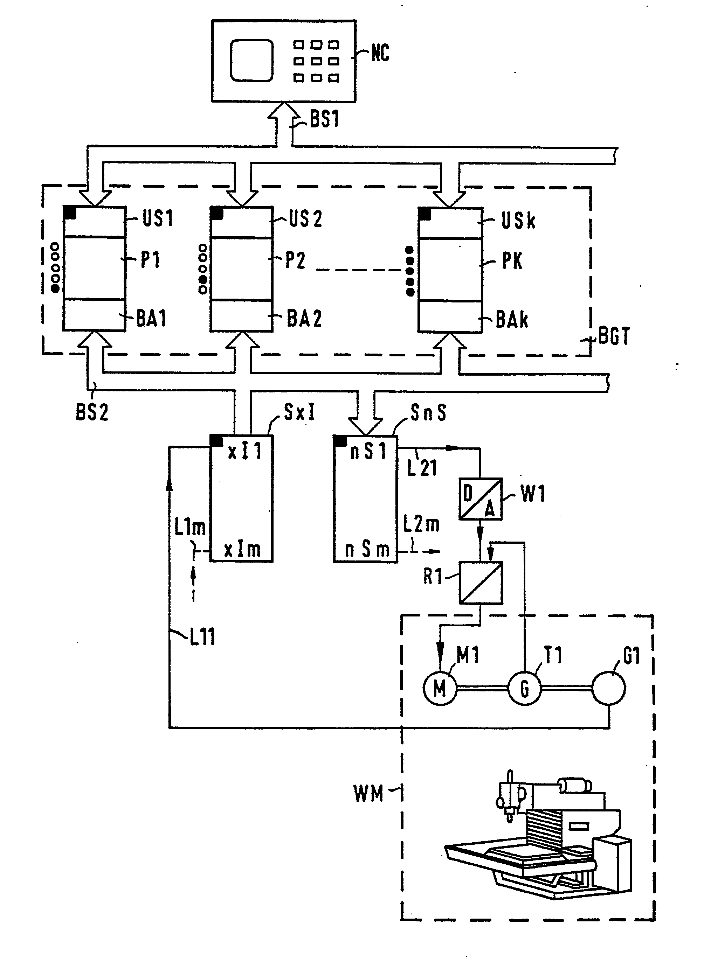

Ein Ausführungsbeispiel der Erfindung ist in der Zeichnung dargestellt und wird im folgenden näher erläutert.

Die Darstellung zeigt in Form eines Blockschaubildes eine numerische Steuerung NC (durch Bildschirm und Tastenfeld angedeutet), die über ein zentrales Bussystem BS1 mit Prozessoren P1, P2 bis Pk für die Lageregelung von m Achsen einer Werkzeugmaschine WM verbunden ist. Die Prozessoren P1, P2 bis Pk sind in einem Baugruppenträger BGT angeordnet, der durch gestrichelte Linien angedeutet ist. Jedem der Prozessoren P1, P2 bis Pk ist jeweils ein Übergabespeicher US1, US2 bis USk vorgeschaltet, der den jeweiligen Prozessor P1, P2 bis Pk mit dem zentralen Bussystem BS1 verbindet. Ferner ist jedem der Prozessoren P1, P2 bis Pk jeweils ein Busarbiter BA1, BA2 bis BAk nachgeschaltet, der die Prozessoren P1, P2 bis Pk mit einem lokalen Bussystem BS2 verbindet.

Jedem der Prozessoren P1, P2 bis Pk ist jeweils eine Steckplatzkennung zugeordnet, wie dies in der Darstellung durch seitlich neben jedem der Prozessoren P1, P2 bis Pk angeordnete Kodierschlüssel gezeigt ist. Diese sind dabei jeweils durch fünf je nach Kodierung offene bzw. ausgefüllte Kreise bezeichnet. Die eigentliche Kodierung kann dabei so erfolgen, daß über fünf Leitungen je nach Steckplatz eine Folge von Spannungswerten logisch "0" oder logisch "1" der jeweiligen eingesteckten Baugruppe zugeführt wird (durch ausgefüllten Kreise für logisch "1" und offene Kreise für logisch "0" im Kodierschlüssel angedeutet).

An das lokale Bussystem BS2 sind ein Speicher SxI für Ist-Lagen xl1 bis xlm aller Achsen 1 bis m sowie ein Speicher SnS für alle entsprechenden Soll-Bewegungen, in diesem Fall die Soll-Drehzahlen nS1 bis nSm geschaltet.

Die Konfiguration aus numerischer Steuerung NC, Prozessoren P1, P2 bis Pk und Speichermitteln SxI und SnS dient wie eingangs erwähnt dazu, bei der Werkzeugmaschine WM mit m Achsen, deren Soll-Lagen zu gewährleisten. Von der numerischen Steuerung NC werden dazu die Werte für die Soll-Lagen aller Achsen über das zentrale Bussystem BS1 den Prozessoren P1 bis Pk zugeführt, von denen jeder die Funktion eines Lagereglers erfüllen kann. Es sei der Fall angenommen, daß die m-achsige Werkzeugmaschine WM k-1 Achsen aufweist, die jeweils eine solche Dynamik beinhalten, daß jeder dieser Achse ein gesonderter Prozessor für die Lageregelung zuzuordnen ist, während die übrigen Achsen von einem einzigen Prozessor seriell bedient werden können. Der Anwender wird demgemäß den Baugruppenträger BGT mit k Prozessoren für die Lageregelung P1, P2 bis Pk bestücken. Jedem Prozessor P1, P2 bis Pk ist von vorneherein ein elektrisch kodiertes Typkennzeichen eigen. Ferner wird über die oben geschilderte Baugruppenkodierung jedem der Prozessoren P1 bis Pk mitgeteilt, an welchem Steckplatz des Baugruppenträgers BGT er sich befindet. Die numerische Steuerung NC ruft nun nacheinander alle Steckplätze auf und jeder Prozessor P1, P2 bis Pk eines besetzten Steckplatzes meldet sich mit seinem Typkennzeichen. Daraufhin wird von der numerischen Steuerung NC unter Aufrufung der Steckplätze jedem der Prozessoren P1, P2 bis Pk eine für den weiteren Datenverkehr relevante Adresse mitgeteilt. Diese relevante Adresse ermöglicht es, daß jeder der Prozessoren P1, P2 bis Pk diejenigen von der numerischen Steuerung NC ermittelten Soll-Lagen mit seinem jeweils zugehörigen Übergabespeicher US1, US2 bis USk übernimmt, die für die zugehörigen Achsen bestimmt sind. Ferner ist es möglich, daß von der numerischen Steuerung NC auch jedem der Prozessoren P1, P2 bis Pk die Parameter für den Umsetzvorgang von der Lageabweichung zur Soll-Bewegung, d. h. zur Soll-Drehzahl, des oder der zugehörigen Achsantriebe mitgeteilt wird.

Wenngleich jeder Achse jeweils ein Achsantrieb (Motor M) zugeordnet ist, wird im Ausführungsbeispiel der Übersichtlichkeit halber nur der Motor M1 für die erste der m Achsen der Werkzeugmaschine WM gezeigt. Verbunden mit jedem Motor M ist jeweils ein Tachogenerator G - für den Motor M1 ein Tachogenerator T1 - sowie jeweils ein Wegimpulsgeber, für den Motor M1 ein Wegimpulsgeber G1.

Durch jeden Wegimpulsgeber wird jeweils die Ist-Lage der zugehörigen Achse ermittelt und dem Speicher SxI für die Ist-Lage xl1 bis xlm der m Achsen über Leitungen L11 bis L1m (gestrichelt dargestellt) zugeführt. Im Speicher SxI liegen damit alle Ist-Lagen xl1 bis xlm aller m-Achsen der Werkzeugmaschine WM vor. Jeder der Prozessoren P1, P2 bis Pk hat über die zugehörigen Busabiter BA1 bis BAk und das lokale Bussystem BS2 Zugriff auf den Speicher SxI und dessen vollen Speicherinhalt. Die Prozessoren P2 bis Pk für die Lageregelung jeweils einer von k-1 Achsen und der Prozessor P1 für die übrigen Achsen bilden nun aus den über das zentrale Bussystem BS1 zugeführten jeweiligen Werten für diese Soll-Lagen der Achsen sowie über den vom Speicher SxI über das lokale Bussystem BS2 entnehmbaren Ist-Lagewerten der Achsen die jeweiligen Soll-Drehzahl nS1 bis nSm für die m Achsen der Werkzeugmaschine WM. Sofern für den Umsetzvorgang eines oder mehrerer der Prozessoren P1, P2 bis Pk die Berücksichtigung von Soll-Drehzahlen bestimmter Achsen vorgesehen ist, können die Werte dieser Soll-Bewegungen ohne weiteres ebenfals über das lokale Bussystem BS2 dem jeweiligen Prozessor P1, P2 bis Pk zugeleitet werden.

Die Soll-Drehzahlen für alle Achsantriebe gelangen über Leitungen L21 bis L2m (gestrichelt angedeutet) an jeweils einen Digital-Analog-Wandler, von denen der Übersichtlichkeit halber nur der Wandler W1 für die erste Achse der Werkzeugmaschine WM dargestellt ist. Der analoge Wert der jeweiligen Soll-Drehzahl wird jeweils einem Drehzahlregler, für die erste Achse einem Drehzahlregler R1, zugeleitet, dort mit einer vom Tachogenerator T1 ermittelten Ist-Drehzahl verglichen und dementsprechend wird das eigentliche Steuersignal für den Achsantrieb der ersten Achse, d. h. den Motor M1, generiert.

Das zentrale Bussystem BS1 kann auch mit weiteren der numerischen Steuerung NC zugeordneten Einheiten im Rahmen der möglichen Datenübertragungskapazität kommunizieren und ebenso kann auch das lokale Bussystem BS2 beispielsweise mit Überwachungsbausteinen für die Soll-Drehzahlen und die Ist-Lagen verbunden sein.

## Patentansprüche

1. Steuerungseinrichtung für eine mehrachsige Werkzeugmaschine mit folgenden Merkmalen:
   a) Die Steuerung erfolgt gemäß vorgegebenen Teilprogramme, entsprechend denen Soll-Lagen (nS1 bis nSm) für alle Achsen ermittelt werden,
   b) mit jeweils einem jeweils einer Achse zugeordneten Lagegeber (G1) wird die jeweilige Ist-Lage (xl1 bis xlm) jeder lageregelbaren Achse erfaßt,
   c) Soll-Lage (nS1 bis nSm) und Ist-Lage (xl1 bis xlm) jeder dieser Achsen sind jeweils mindestens einem Lageregler (R1) zuführbar, durch denjeweils ein dem Wert einer Soll-Bewegung entsprechendes Steuersignal für den der jeweilige Achse zugeordneten Antrieb (U1) auslösbar ist,
   d) eine bis zur Anzahl der lageregelbaren Achsen entsprechende Anzahl (k) gleichartiger Prozessoren (P1 bis Pk) ist für die Lageregelung an die Steuerungseinrichtung (NC) schaltbar,
   e) jedem Prozessor (P1 bis Pk) ist ein Übergabespeicher (US1 bis USk) für die Soll-Lagen der Achsen zugeordnet,
   f) es sind Speichermittel (Sxl, SnS) für die Werte aller Ist-Lagen (xl1 bis xlm) und Soll-Bewegungen (nS1 bis nSm) vorgesehen und
   g) von jedem Prozessor (P1 bis Pk) her besteht Zugriffsmöglichkeit auf den gesamten Speicherinhalt der Speichermittel (Sxl, SnS)
   gekennzeichnet durch die weiteren Merkmale:
   h) von der Steuerungseinrichtung (NC) ist die jeweilige Anzahl (k) der Prozessoren (P1 bis Pk) detektierbar und jedem Prozessor (P1 bis Pk) ist dementsprechend von der Streuerungseinrichtung (NC) mitteilbar, für welche Gruppe der Achsen gemäß achsspezifischen Umsetzparametern das jeweilige Antriebs-Steuersignal jeweils zu generieren ist,
   i) jedem Prozessor (P1 bis Pk) ist dazu ein Steckplatz innerhalb eines Baugruppenträgers (BGT) zugeordnet,
   j) jedem Prozessor (P1 bis Pk) ist dazu ein Typenkennzeichen zugeteilt,
   k) von der Steuerungseinrichtung (NC) erfolgt während einer Initialisierungsphase ein Aufruf aller Steckplätze, der eine Antwort des jeweiligen Prozessors (P1 bis Pk) mit dessen Typenkennzeichen bedingt und
   l) über die Steckplatzkennung ist jedem Prozessor (P1 bis Pk) seine für den weiteren Datenverkehr relevante Adresse von der Steuerungseinrichtung (NC) mitteilbar.

2. Steuerungseinrichtung nach Anspruch 1, dadurch gekennzeichnet, daß die Verbindung zwischen Steuerungseinrichtung (NC) und Prozessoren für die Lageregelung (P1 bis Pk) über ein zentrales Bussystem (BS1) erfolgt und die Verbindung der Prozessoren für die Lageregelung (P1 bis Pk) mit den Speichermitteln (Sxl, SnS) über ein lokales Bussystem (BS2) erfolgt, wobei jedem der Prozessoren (P1 bis Pk) ein Busarbiter (BA1 bis BAk) zugeordnet ist, wohingegen die Werte der Soll-Bewegungen (nS1 bis nSm) von den jeweiligen Speichermitteln (SnS) fortlaufend an die zugehörigen Achsantriebe (M1) weiterleitbar sind und die Werte der Ist-Lagen (xl1 bis xlm) den zugehörigen Speichermitteln (Sxl) fortlaufend von den Lagegebern (G1) zuführbar sind.

3. Steuerungseinrichtung nach einem der vorstehenden Ansprüche, dadurch gekennzeichnet, daß Geber (T1) für die jeweiligen Ist-Bewegungen vorgesehen sind und daß zwischen die Lageregler und die Achsantriebe (M1) jeweils Geschwindigkeitsregler (R1) schaltbar sind.

4. Steuerungseinrichtung nach einem der vorstehenden Ansprüche, dadurch gekennzeichnet, daß Geber (T1) für die jeweiligen Ist-Bewegungen vorgesehen sind und daß Speichermittel für die Werte der Ist-Bewegungen vorgesehen sind.

5. Steuerungseinrichtung nach einem der Ansprüche 1 bis 3, dadurch gekennzeichnet, daß Geber (T1) für die jeweiligen Ist-Bewegungen vorgesehen sind und daß Speichermittel für die Werte der Ist-Bewegungen parallel zu den Speichermitteln (SnS) für die Soll-Bewegungen vorgesehen sind.

## Claims

1. Control device for a multiple-axis machine tool having the following features:
   a) The control takes place in accordance with specified part programs, corresponding to which desired positions (nS1 to nSm) are determined for all axes,
   b) The respective actual position (xl1 to xlm) of each axis which can be position-regulated is detected with in each case a position sensor (G1) associated in each case with an axis,
   c) Desired position (nS1 to nSm) and actual position (xl1 to xlm) of each of these axes can be supplied in each case to at least one position regulator (R1), by means of which in each case a control signal corresponding to the value of a desired movement can be released for the drive (U1) associated with the respective axis,
   d) A number (k) of similar processors (P1 to Pk) corresponding to the number of the axes which can be position-regulated can be connected for the position regulation to the control device (NC),
   e) A transfer store (US1 to USk) for the desired positions of the axes is associated with each processor (P1 to Pk),
   f) Store means (Sxl, SnS) are provided for the values of all actual positions (Xl1 to xlm) and desired movements (nS1 to nSm) and
   g) From each processor (P1 to Pk) there is access possibility to the entire store content of the store means (Sxl, SnS) characterized by the further features:

h) The respective number (k) of processors (P1 to Pk) can be detected by the control device (NC) and to each processor (P1 to Pk) it can be communicated accordingly by the control device (NC), for which group of axes in accordance with axis-specific conversion parameters the respective drive control signal in each case can be generated,

i) in addition a module position within an assembly carrier (BGT) is associated with each processor (P1 to Pk),

j) in addition a type characteristic is allocated to each processor (P1 to Pk),

k) during an initialization phase a call of all module positions takes place from the control device (NC), which call causes an answer of the respective processor (P1 to Pk) with its type characteristic and

l) by means of the module position identification signal the control device (NC) can communicate to each processor (P1 to Pk) its address which is relevant for the further data traffic.

2. Control device according to claim 1, characterized in that the connection between control device (NC) and processors for the position regulation (P1 to Pk) takes place by means of a central bus system (BS1) and the connection of the processors for the position regulation (p1 to Pk) to the store means (Sxl, SnS) takes place by means of a local bus system (BS2), whereby with each of the processors (P1 to Pk) a bus arbiter (BA1 to BAk) is associated, whereas the values of the desired movements (nS1 to nSm) can be continuously conducted further by the respective store means (SnS) to the appertaining axis drives (M1) and the values of the actual positions (Xl1 to xlm) can be supplied to the appertaining store means (Sxl) continuously by the position sensors (G1).

3. Control device according to one of the above claims, characterized in that sensors (T1) are provided for the respective actual movements and in that in each case speed regulators (Rl) can be connected between the position regulators and the axis drives (M1).

4. Control device according to one of the above claims, characterized in that sensors (T1) are provided for the respective actual movements and in that store means are provided for the values of the actual movements.

5. Control device according to one of claims 1 to 3, characterized in that sensors (T1) are provided for the respective actual movements and in that store means are provided for the values of the actual movements parallel to the store means (SnS) for the desired movements.

**Revendications**

1. Dispositif de commande pour une machine-outil à plusieurs axes, présentant les particularités suivantes:

a) la commande est réalisée en fonction de programmes partiels prédéterminés, sur la base desquels sont déterminées des positions de consigne (nS1 à nSm) pour sous les axes,

b) la position réelle respective (xl1 à xlm) de chaque axe, dont la position est réglable, est détectée à l'aide d'un capteur de position (G) associé respectivement à un axe,

c) la position de consigne (nS1 à nSm) et la position réelle (xl1 à xlm) de chacun de ces axes peut être envoyée respectivement à au moins un régulateur de position (R1), à l'aide duquel peut être déclenché un signal de commande, qui correspond à la valeur d'un déplacement de consigne, pour le dispositif d'entraînement (U1) associé à l'axe concerné,

d) un nombre (k) de processeurs identiques (P1 à Pk), qui correspond au nombre des axes dont la position est réglable, peut être raccordé, pour la régulation de position, au dispositif de commande (NC),

e) une mémoire de transfert (US1 à USk) pour les positions de consigne des axes est associée à chaque processeur (P1 à Pk),

f) il est prévu des moyens de mémoire (Sx1, SnS) pour les valeurs de toutes les positions réelles (xl1 à xlm) et pour tous les déplacements de consigne (nS1 à nSm), et

g) il existe, à partir de chaque processeur (P1 à Pk) une possibilité d'accès à l'ensemble du contenu des moyens de mémoire (Sxl, SnS), remarquable par les caractéristiques suivantes:

h) le dispositif de commande (NC) peut détecter le nombre respectif (K) des processeurs (P1 à PK, à chacun desquels le dispositif de commande (NC) peut par conséquent communiquer pour quel groupe d'axes le signal respectif de commande du dispositif d'entraînement doit être respectivement produit, en fonction de paramètres de conversion spécifiques aux axes,

i) à chaque processeur (P1 à Pk) est associé, à cet effet, un point d'enfichage à l'intérieur d'un porte-modules (BGT),

j) à cet effet un indicatif de type est affecté à chaque processeur (P1 à Pk),

k) pendant une phase d'initialisation, le dispositif de commande (NC) effectue un appel de tous les points d'enfichage qui conditionnent une réponse du processeur respectif (P1 à Pk) avec un indicatif de type de ce processeur, et

l) le dispositif de commande (NC) peut communiquer, par l'intermédiaire de l'indicatif du point d'enfichage, à chaque processeur (P1 à Pk), son adresse, importante pour la poursuite du trafic de données.

2. Dispositif de commande suivant la revendication 1, caractérisé par le fait que la liaison entre le dispositif de commande (NC) et les processeurs pour la régulation de position (P1 à Pk) est réalisée par l'intermédiaire d'un système de bus central (BS1) et la liaison des processeurs pour la régulation de position (P1 à Pk) est réalisée à l'aide des moyens de mémoire (Sxl, SnS) au moyen d'un système de bus local (BS2), auquel cas à chacun des processeurs (P1 à Pk) est associé un arbitre de bus (BA1 à BAk), tandis que les valeurs des déplacement de consigne (nS1 à nSm) peuvent être retransmis en permanence par les moyens respectifs de mémoire (SnS) aux dispositifs associés (M1) d'entraînement des axes, et les valeurs des positions réelles (xl1 à xlm) peuvent être envoyées en permanence aux moyens associés de mémoire (Sxl) par les capteurs de position (G1).

3. Dispositif de commande suivant l'une des revendications précédentes, caractérisé par le fait qu'il est prévu des capteurs (T1) pour les déplacements réels respectifs et que des régulateurs respectifs de vitesse (R1) peuvent être branchés entre les régulateurs de position et les dispositifs (M1) d'entraînement des axes.

4. Dispositif de commande suivant les revendications précédentes, caractérisé par le fait qu'il est prévu des capteurs (T1) pour les déplacements réels respectifs, et qu'il est prévu des moyens de mémoire pour les valeurs des déplacements réels.

5. Dispositif de commande suivant l'une des revendications 1 à 3, caractérisé par le fait que des capteurs (T1) sont prévus pour les déplacements réels respectifs et que des moyens de mémoire pour les valeurs des déplacements réels sont prévus en parallèle avec les moyens de mémoire (SnS) pour les déplacements de consigne.